# EUROPEAN PATENT APPLICATION

(11) **EP 4 742 623 A1**
(43) Date of publication of application: **13.05.2026**
(21) Application number: 24835379.9
(22) Date of filing: 03.07.2024
(51) Int. Cl.: H04L 61/30

(54) **IDENTIFIER ALLOCATION METHOD AND APPARATUS FOR PERSONAL IOT NETWORK, AND NETWORK-SIDE DEVICE**

(30) Priority: 06.07.2023 CN 202310830085
(71) Applicant: Vivo Mobile Communication Co., Ltd., Dongguan, Guangdong 523863 (CN)
(72) Inventor: WANG, Hui, Dongguan, Guangdong 523863 (CN)
(74) Representative: Shieldmark
(86) International application number: PCT/CN2024/103414
(87) International publication number: WO 2025/007899

(57) **Abstract**

This application discloses an identifier assignment method and apparatus for a personal IoT network, and a network side device. The method includes: assigning, by a first network element, a PIN identifier to a target personal IoT network PIN, where the PIN identifier is unique in the first network element; and sending or configuring, by the first network element, the PIN identifier of the target PIN to a second network element.

## Description

This application claims priority to Chinese Patent Application No. 202310830085.5, filed with the China National Intellectual Property Administration on July 6, 2023 and entitled "IDENTIFIER ASSIGNMENT METHOD AND APPARATUS FOR PERSONAL IOT NETWORK, AND NETWORK SIDE DEVICE", which is incorporated herein by reference in its entirety.

### TECHNICAL FIELD

This application belongs to the technical field of communication, and specifically relates to an identifier assignment method and apparatus for a personal IoT network, and a network side device.

### BACKGROUND

A personal IoT network (Personal IoT network, PIN) is a network that is based on a large quantity of added consumer IoT devices and that is formed by and derived from these IoT devices. A user mainly creates a personal IoT network by using all these personal IoT devices at home or around a body, for example, a wearable device or an IoT device at home. Usually, the PIN is generally used in scenarios such as a home and an office. IoT devices deployed in these scenarios may implement interconnection, mutual communication, and service acquisition. In addition, the IoT device in the PIN may be implemented by using a mechanism, and access a 5G network, access another server of the network, or complete a service by using a PIN element with gateway capability (PIN element with gateway capability, PEGC) in the PIN. When the PEGC uses a user equipment (User Equipment, UE) route selection policy (UE Route Selection Policy, URSP) protocol to route PIN traffic to a protocol data unit (Protocol Data Unit, PDU) session, routing needs to be performed based on a PIN identifier. Then, a method for assigning the PIN identifier is not provided in related technologies, and thus the PIN traffic cannot be routed.

### SUMMARY

Embodiments of this application provide an identifier assignment method and apparatus for a personal IoT network, and a network side device, to implement identifier assignment of a PIN.

According to a first aspect, an identifier assignment method for a personal IoT network is provided. The method includes: assigning, by a first network element, a PIN identifier to a target PIN, where the PIN identifier is unique in the first network element; and sending or configuring, by the first network element, the PIN identifier of the target PIN to a second network element.

According to a second aspect, an identifier assignment apparatus for a personal IoT network is provided, applied to a first network element. The apparatus includes: an assignment module, configured to assign a PIN identifier to a target PIN, where the PIN identifier is unique in the first network element; and a processing module, configured to send or configure the PIN identifier of the target PIN to a second network element.

According to a third aspect, a network side device is provided. The network side device includes a processor and a memory, the memory stores a program or instructions runnable on the processor, and when executed by the processor, the program or the instructions implement steps of the method according to the first aspect.

According to a fourth aspect, a readable storage medium is provided. The readable storage medium stores a program or instructions, and when executed by the processor, the program or instructions implement steps of the method according to the first aspect.

According to a fifth aspect, a chip is provided. The chip includes a processor and a communication interface. The communication interface is coupled to the processor. The processor is configured to run a program or instructions to implement steps of the method according to the first aspect.

In this embodiment of this application, the first network element assigns the PIN identifier to the target PIN, where the PIN identifier is unique in the first network element; and then, the first network element sends or configures the PIN identifier of the target PIN to the second network element. Because the PIN identifier is unique in the first network element, the first network element sends or configures the PIN identifier of the target PIN to the second network element, so that the second network element can identify the target PIN.

### BRIEF DESCRIPTION OF THE DRAWINGS

FIG. 1 is a block diagram of a wireless communication system to which an embodiment of this application is applicable;
FIG. 2 is a schematic flowchart of an identifier assignment method for a personal IoT network according to an embodiment of this application;
FIG. 3 is a schematic structural diagram of an identifier assignment apparatus for a personal IoT network according to an embodiment of this application;
FIG. 4 is a schematic structural diagram of a communication device according to an embodiment of this application; and
FIG. 5 is a schematic diagram of a hardware structure of a network side device according to an embodiment of this application.

### DETAILED DESCRIPTION

Technical solutions in embodiments of this application will be clearly described in the following with reference to accompanying drawings in the embodiments of this application. Apparently, the described embodiments are merely some rather than all of the embodiments of this application. Based on the embodiments of this application, all other embodiments obtained by those of ordinary skill in the art fall within the protection scope of this application.

Terms "first", "second", and the like in this application are used to distinguish similar objects, but are not used to describe a specific order or sequence. It is to be understood that the terms used in this way are exchangeable in a proper case, so that the embodiments of this application can be implemented in a sequence other than sequences graphically shown or described here, and objects distinguished by "first" and "second" are usually of the same class without limiting a number of the objects, for example, a first object may be one or more. In addition, "or" in this application represents at least one of connected objects. For example, "A or B" covers three solutions, that is, solution 1: including A and excluding B; solution 2: including B and excluding A; and solution 3: including both A and B. Character "/" in this specification generally represents an "or" relationship between the associated objects.

It is worth noting that technologies described in this application are not limited to a long term evolution (Long Term Evolution, LTE)/evolution (LTE-Advanced, LTE-A) system of the LTE, and may alternatively be used for other wireless communication systems such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, and a single-carrier frequency-division multiple access (Single-carrier Frequency-Division Multiple Access, SC-FDMA), or other systems. Terms "system" and "network" in the embodiments of this application are often used interchangeably. The described technology can not only be used in the systems and radio technologies mentioned above, but also be used in other systems and radio technologies. The following description describes a new radio (New Radio, NR) system for a purpose of giving examples, and the term NR is used in most of the following descriptions. However, these technologies may alternatively be applied to systems other than an NR system, for example, a 6^{th} generation (6^{th} Generation, 6G) communication system.

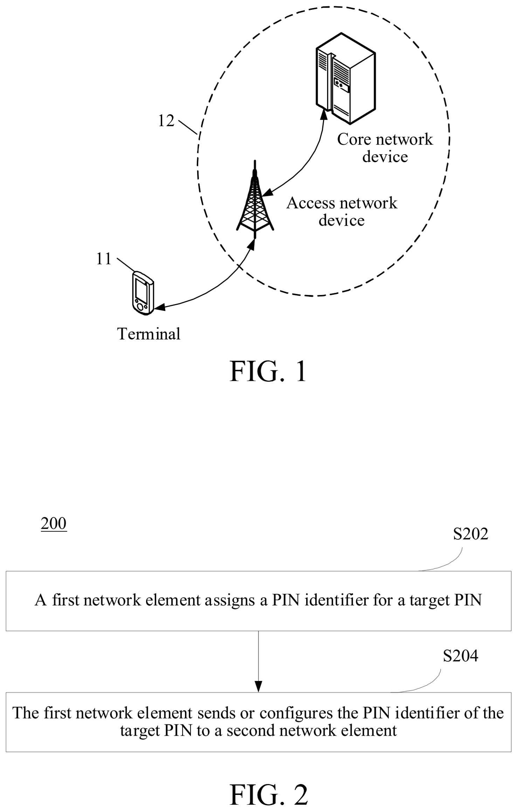

FIG. 1 is a block diagram of a wireless communication system to which an embodiment of this application is applicable. The wireless communication system includes a terminal 11 and a network side device 12. The terminal 11 may be a terminal side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-Mobile Personal Computer, UMPC), a mobile Internet device (Mobile Internet Device, MID), an augmented reality (Augmented Reality, AR) or virtual reality (Virtual Reality, VR) device, a robot, a wearable device (Wearable Device), a flight vehicle, a vehicle user equipment (Vehicle User Equipment, VUE), a ship-borne equipment, a pedestrian user equipment (Pedestrian User Equipment, PUE), a smart home appliance (a home device with a wireless communication function, such as a refrigerator, a television, a washing machine, or furniture), a game console, a personal computer (Personal Computer, PC), a teller machine, or a self-service machine. The wearable device includes a smart watch, a smart bracelet, a smart headset, smart glasses, smart jewelry (a smart wristlet, a smart chain bracelet, a smart ring, a smart necklace, a smart ankle bangle, a smart ankle chain, and the like), a smart wristband, smart clothing, and the like. The vehicle user equipment may alternatively be referred to as an in-vehicle terminal, an in-vehicle controller, an in-vehicle module, an in-vehicle component, an in-vehicle chip, an in-vehicle unit, or the like. It is to be noted that a specific type of the terminal 11 is not limited in the embodiments of this application. The network side device 12 may include an access network device or a core network device. The access network device may alternatively be referred to as, a radio access network (Radio Access Network, RAN) device, a radio access network function, or a radio access network unit. The access network device may include a base station, a wireless local area network (Wireless Local Area Network, WLAN) Access Point (AS), a Wireless Fidelity (WiFi) node, or the like. The base station may be referred to as a node B (Node B, NB), an evolved node B (Evolved Node B, eNB), a next generation node B (next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP) or some other suitable terms in the field as long as the same technical effects are achieved, and the base station is not limited to a specific technical word. It is to be noted that in the embodiments of this application, introduction is made by only taking the base station in the NR system as an example, and a specific type of the base station is not limited.

The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It is to be noted that, in the embodiments of this application, an introduction is made by only using the core network device in the NR system as an example, and a specific type of the core network device is not limited.

An identifier assignment method and apparatus for a personal IoT network, and a network side device according to the embodiments of this application are described in detail below by using some embodiments and application scenarios thereof with reference to the accompanying drawings.

FIG. 2 is a schematic flowchart of an identifier assignment method for a personal IoT network according to an embodiment of this application. As shown in FIG. 2, the method includes the following steps.

S202: A first network element assigns a PIN identifier to a target PIN, where the PIN identifier is unique in the first network element.

In this embodiment of this application, the first network element may include a target network element in a Public Land Mobile Network (Public Land Mobile Network, PLMN), for example, the target network element may be at least one of the following: a unified data management function (UDM) and a network exposure function (NEF). The PLMN may be a PLMN that provides a 5G service to the target PIN. That is, it may be that the UDM or the NEF in the PLMN assigns the PIN identifier to the target PIN.

For example, a user subscribes to a PIN service (a wearable service, a household IoT device service, or the like) with an operator, and the operator assigns the PIN identifier based on the subscribed PIN service. Specifically, it may be that the UDM or the NEF that provides a service to the user assigns the PIN identifier.

Alternatively, the first network element may include an AF. That is, it may be that the AF assigns the PIN identifier to the target PIN.

In a practical application, the user may subscribe to one or more PINs on a network side. After the user subscribes to the one or more PINs, the first network element may assign the PIN identifier to each PIN.

In an implementation, the PIN identifier may include: a first character string. The first character string is a character string that is assigned by the first network element and is unique in the first network element.

In an implementation, the PIN identifier further includes: a second character string, and the first character string is connected to the second character string by using a preset symbol. For example, the second character string may be a domain name or an AF ID. The AF ID is an AF identifier for assigning the above first character string.

Optionally, the preset symbol may include an English period, for example, <string1>.<string2>. Alternatively, the preset symbol may alternatively include @, for example, <string1>@<string2>.

S204: The first network element sends or configures the PIN identifier of the target PIN to a second network element.

In this embodiment of this application, the first network element may send the PIN identifier of the target PIN to the second network element or may pre-configure the PIN identifier of the target PIN to the second network element. This is not specifically limited in this embodiment of this application.

In this embodiment of this application, in a case that the first network element is the target network element in the PLMN, the second network element may be an AF, a PCF, or a UE. In a case that, the second network element is an AF, the AF may send the PIN identifier of the target PIN to the PCF or the UE directly or through another network element.

In a case that the first network element is an AF, the second network element may be a PCF or a UE.

The above UE may be a UE associated with subscription of the target PIN.

In this embodiment of this application, in a PIN scenario, the UE mentioned in this application may be a PEGC.

After obtaining the PIN identifier of the target PIN, the PCF may generate a user route selection policy of the target PIN based on the PIN identifier, and send the user route selection policy to the UE for use. The UE may normally route traffic of the target PIN based on the user route selection policy and based on the PIN identifier of the target PIN.

In this embodiment of this application, the first network element assigns the PIN identifier to the target PIN, where the PIN identifier of the target PIN is unique in the first network element, and then the first network element sends or configures the PIN identifier of the target PIN to the second network element. Because the PIN identifier is unique in the first network element, the first network element sends or configures the PIN identifier of the target PIN to the second network element, so that the second network element can identify the target PIN, generate a corresponding a URSP based on the PIN identifier, and send the corresponding URSP to the UE for use, or the first network element directly configures a PIN ID to the URSP after assigning the PIN ID, and then configures the URSP to the UE, so that the UE performs correct routing on traffic of the target PIN based on the PIN identifier.

In an implementation, in a case that the first network element includes a target network element in a PLMN that provides a service to the target PIN, the first character string may include: a group identifier of the target PIN.

In the above implementation, a group identifier (external group identifier) of the target PIN is used as the PIN ID, for example, a form of the PIN identifier may be groupname@domain name, where the groupname is a PIN name (name).

In an implementation, a group identified by an external group identifier may be a PIN (The group can be a PIN), or an external group identifier may alternatively identify a PIN (An External Group Identifier also identifies a PIN).

In an implementation, an example of a format of the external group identifier is as follows:
Example 1: Group1@domain.com; and
Example 2: PIN1@domain.com.

In another implementation, in a case that the first network element includes a target network element in a PLMN that provides a service to the target PIN, the first character string may include: a PIN name generated by the first network element. That is, in this implementation, the first network element may generate a new PIN name for the target PIN instead of reusing an existing identifier. The PIN name generated by the first network element may be a label or a string of labels, for example, PIN1.

In an implementation, in a case that the first network element includes a target network element in a PLMN that provides a service to the target PIN, and in a case that the PIN identifier includes a second character string, the second character string includes: a domain name identifier. The domain name identifier may be a domain name identifier registered by the target PIN.

For example, the PIN identifier of the target PIN may be: <PIN name>.<domain name>, where the domain name is a domain name identifier, and the domain name identifier may be connected to the PIN name by using an English period. The PIN name may be the above group identifier, or may be a PIN name generated by the first network element.

In an implementation, step 202 may include: the first network element assigns the PIN identifier to the target PIN based on a data network name (Data Network Name, DNN) or single network slice selection assistance information (Single Network Slice Selection Assistance Information, S-NSSAI) dedicated to the target PIN.

In this embodiment, the first network element may include a UDM or a NEF. The UDM or the NEF assigns the PIN identifier to the target PIN based on the DNN or the S-NSSAI dedicated to the target PIN. Because the DNN or the S-NSSAI is dedicated to the target PIN, a PIN may be identified based on the DNN or the S-NSSAI. The first network element may assign a unique PIN identifier to the target PIN based on the DNN or the S-NSSAI, and then send or configure the PIN identifier to a second network element. The second network element can generate a corresponding URSP based on the PIN identifier, and send the corresponding URSP to a UE (in a PIN scenario, the UE is a PEGC) for use, so that the UE performs correct routing based on the PIN identifier.

In an implementation, the second network element includes one of the following: an application function (Application Function, AF) and a policy control function (Policy Control Function, PCF).

In this embodiment of this application, the first network element may include a UDM and a NEF, and the second network element may include an AF and a PCF. The UDM or the NEF assigns a PIN identifier to a target PIN, and then sends or configures the PIN identifier to the AF or the PCF, so that the AF or the PCF generates a corresponding URSP based on the PIN identifier of the target PIN, and sends the corresponding URSP to a UE (in a PIN scenario, the UE is a PEGC) for use, so that the UE performs correct routing based on the PIN identifier.

In an implementation, in a case that the first network element is an AF, a form of the PIN identifier of the target PIN may be, for example, a first character string (PIN name) + an AF identifier. The PIN name is unique in the AF, and the AF identifier is unique in the PLMN. Therefore, the first character string is unique in the PLMN.

In an implementation, in a case that the first network element includes an AF, the first character string may be an identifier of a PLMN, for example, the PIN identifier may be: <PLMN ID>.<AF ID>; alternatively, the first character string may be a temporary identifier assigned by the first network element, for example, the PIN identifier may be <temporary identity>.<AF ID>, or <temporary identity>@<AF ID>. Alternatively, the first character string may be an identifier of the first network element, for example, the PIN identifier may be <AF ID>.<temporary identity>.

In an implementation, the identifier of the PLMN is a unique identifier of the PLMN where the AF is located, and the second character string may be an identifier of the AF. The identifier of the AF is a unique identifier of the PLMN where the AF is located, thereby ensuring uniqueness when the AF assigns the PIN identifier of the target PIN.

In an implementation, in a case that the first network element includes an AF, and the PIN identifier includes a second character string, the second character string includes: an identifier of the first network element or a temporary identifier assigned by the first network element.

For example, in a case that the first character string and the second character string of the PIN identifier are connected by using an English period, a form of the PIN identifier may be: <temporary identity>.<AF ID>, or <AF ID>.<temporary identity>, or may be connected by using @: <temporary identity>@<AF ID>.

In an implementation, in a case that the first network element includes an AF, the second network element may include a PCF or a UE.

In this embodiment of this application, the first network element may include an AF, and the second network element may include a PCF or a UE. The AF assigns a PIN identifier to a target PIN, and then sends or configures the PIN identifier to the PCF or the UE directly or indirectly by using another network element, so that the PCF generates a corresponding URSP based on the PIN identifier of the target PIN, and sends the corresponding URSP to the UE (in a PIN scenario, the UE is a PEGC) for use; alternatively, the AF directly configures a PIN ID to the URSP after assigning the PIN ID, and then configures the URSP to the UE, so that the UE performs correct routing based on the PIN identifier.

In one or more implementations, a length of the PIN identifier is variable. That is, the length of the PIN identifier may be changed based on the first network element or the second network element that are different from each other, to adapt to a current network element, to ensure uniqueness of the PIN identifier, so as to ensure that the UE performs correct routing based on the PIN identifier.

The identifier assignment method for a personal IoT network according to the embodiments of this application may be performed by an identifier assignment apparatus for a personal IoT network. The identifier assignment apparatus for a personal IoT network according to the embodiments of this application is described by using an example in which the identifier assignment apparatus for a personal IoT network performs the identifier assignment method for a personal IoT network in this embodiment of this application.

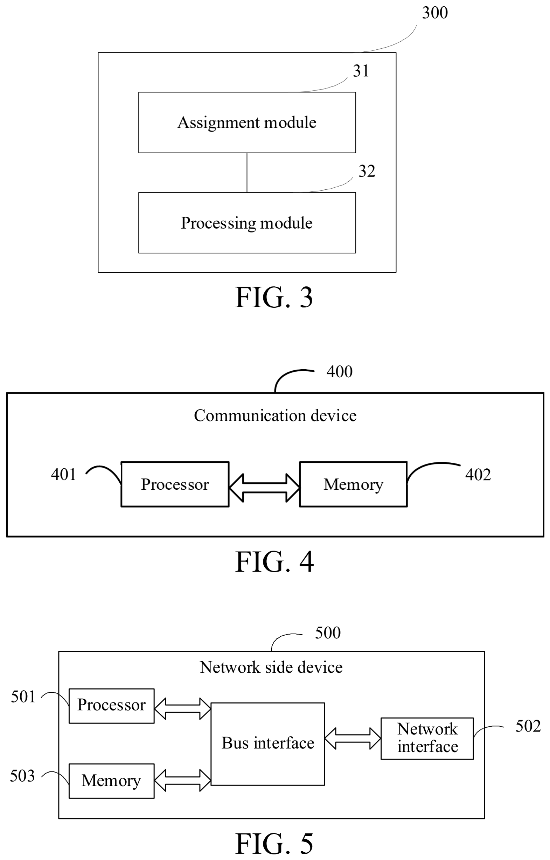

FIG. 3 is a schematic structural diagram of an identifier assignment apparatus for a personal IoT network according to an embodiment of this application. The apparatus is applied to a first network element. Referring to FIG. 3, the identifier assignment apparatus 300 for a personal IoT network may include an assignment module 31 and a processing module 32.

The assignment module 31 is configured to assign a PIN identifier to a target personal IoT network PIN, where the PIN identifier is unique in the first network element. The processing module 32 is configured to send or configure the PIN identifier of the target PIN to a second network element.

In an implementation, the PIN identifier includes: a first character string. The first character string is a character string that is assigned by the first network element and is unique in the first network element.

In an implementation, the PIN identifier further includes: a second character string, and the first character string is connected to the second character string by using a preset symbol.

In an implementation, the first network element includes: a target network element in a public land mobile network PLMN that provides a service to the target PIN, where the target network element includes at least one of the following: a unified data management function and a network exposure function.

In an implementation, the first character string includes one of the following: a group identifier of the target PIN and a PIN name generated by the first network element.

In an implementation, in a case that the PIN identifier includes a second character string, the second character string includes: a domain name identifier.

In an implementation, the assignment module 31 may be configured to assign the PIN identifier to the target PIN based on a data network name or single network slice selection assistance information S-NSSAI dedicated to the target PIN.

In an implementation, the second network element includes one of the following: an application function AF, a policy control function PCF, and a UE.

In an implementation, the first network element includes: an application function AF.

In an implementation, the first character string includes one of the following: an identifier of a PLMN, a temporary identifier assigned by the first network element, and an identifier of the first network element, and the temporary identifier is unique in the first network element.

In an implementation, the identifier of the PLMN is a unique identifier of a PLMN where the AF is located.

In an implementation, in a case that the PIN identifier includes a second character string, the second character string includes: an identifier of the first network element or a temporary identifier assigned by the first network element.

In an implementation, the second network element includes a PCF or a UE.

In an implementation, a length of the PIN identifier is variable.

The identifier assignment apparatus for a personal IoT network according to this embodiment of this application can implement all processes implemented by the method embodiment in FIG. 2, and the same technical effects are achieved. To avoid repetition, details are not described herein again.

As shown in FIG. 4, an embodiment of this application further provides a communication device 400, including a processor 401 and a memory 402. The memory 402 stores a program or instructions runnable on the processor 401. For example, when the communication device 400 is a network side device, the program or instructions, when executed by the processor 401, implement steps of the above identifier assignment apparatus for a personal IoT network, and the same technical effects are achieved. To avoid repetition, details are not described herein again.

An embodiment of this application further provides a network side device, including a processor and a communication interface. The communication interface is coupled to the processor, and the processor is configured to run a program or instructions, to implement steps of above embodiments of the identifier assignment method for a personal IoT network. The network side device embodiment corresponds to the above network side device method embodiment. Various implementation processes and implementation manners of the foregoing method embodiments are all applicable to the network side device embodiment, and the same technical effects can be achieved.

Specifically, an embodiment of this application further provides a network side device. As shown in FIG. 5, the network side device 500 includes: a processor 501, a network interface 502, and a memory 503. The network interface 502 may be, for example, a common public radio interface (common public radio interface, CPRI).

Specifically, the network side device 500 in this embodiment of this application further includes: instructions or a program stored in the memory 503 and runnable in the processor 501, where the processor 501 calls the instructions or the program in the memory 503 to perform steps of above embodiments of the identifier assignment method for a personal IoT network, and the same technical effects are achieved. To avoid repetition, details are not described herein again.

An embodiment of this application further provides a readable storage medium, having a program or instructions stored therein, where when the program or the instructions are executed by a processor, the processes of above embodiments of the identifier assignment method for a personal IoT network are implemented, and the same technical effects can be achieved. To avoid repetition, details are not described herein.

The processor is a processor in the terminal described in the above embodiments. The readable storage medium includes a computer-readable storage medium, such as a computer read-only memory ROM, a random access memory RAM, a magnetic disk, or an optical disk. In some examples, the readable storage medium may be a non-transient readable storage medium.

An embodiment of this application further provides a chip. The chip includes a processor and a communication interface. The communication interface is coupled to the processor, and the processor is configured to run a program or instructions, to implement the processes of above embodiments of the identifier assignment method for a personal IoT network, and the same technical effects can be achieved. To avoid repetition, details are not described herein.

It is to be understood that the chip mentioned in this embodiment of this application may alternatively be referred to as a system level chip, a system chip, a chip system, a system-on-a-chip, and the like.

The processor mentioned in the embodiments of this application may include a general-purpose processor and a dedicated processor, for example, a central processing unit (Central Processing Unit, CPU), a microprocessor, a digital signal processor (Digital Signal Processor, DSP), an artificial intelligence (Artificial Intelligent, AI) processor, a graphics processing unit (Graphics Processing Unit, GPU), an application specific integrated circuit (Application Specific Integrated Circuit, ASIC), a network processor (Network Processor, NP), a field programmable gate array (Field Programmable Gate Array, FPGA), or another programmable logic device, a gate circuit, a transistor, a discrete hardware component.

It is to be noted that, herein, terms "include", "comprise", or any other variation thereof herein are intended to cover a non-exclusive inclusion, such that a process, method, article or apparatus including a series of elements not only includes those elements, but also includes other elements that are not explicitly listed, or includes elements inherent to such a process, method, article or apparatus. Without more limitations, elements defined by the sentence "including one" does not exclude that there are other same elements in the process, the method, the article, or the apparatus. In addition, it is to be noted that scopes of the methods and apparatuses in implementations of this application are not limited to performing functions in an order shown or discussed, but may alternatively include performing the functions in a substantially simultaneous manner or in a reverse order according to the functions involved. For example, the described methods may be implemented in an order different from that described, and various steps may be added, omitted or combined. In addition, features described with reference to some examples may alternatively be combined in other examples.

Through the description of the above implementations, those skilled in the art can clearly understand that the embodiment method may be implemented by means of computer software and a necessary general hardware platform, and certainly, may alternatively be implemented through hardware. The computer software product is stored in a storage medium (such as a ROM, a RAM, a magnetic disk, and a compact disk), including several instructions to enable a terminal or a network side device to perform the method in the embodiments of this application.

Embodiments of this application have been described above with reference to accompanying drawings. However, this application is not limited to the specific implementations. The specific embodiments are merely examples rather than restrictions. Those of ordinary skill in the art may make implementations in many forms under the teaching of this application without departing from the spirit of this application and the scope of protection of claims. These implementations all fall within the scope of protection of this application.

## Claims

1. An identifier assignment method for a personal IoT network, comprising:
assigning, by a first network element, a PIN identifier to a target personal IoT network PIN, wherein the PIN identifier is unique in the first network element; and
sending or configuring, by the first network element, the PIN identifier of the target PIN to a second network element.

2. The method according to claim 1, wherein the PIN identifier comprises: a first character string, and the first character string is a character string that is assigned by the first network element and is unique in the first network element.

3. The method according to claim 2, wherein the PIN identifier further comprises: a second character string, and the first character string is connected to the second character string by using a preset symbol.

4. The method according to claim 2 or 3, wherein the first network element comprises: a target network element in a public land mobile network PLMN that provides a service to the target PIN, wherein the target network element comprises at least one of the following: a unified data management function and a network exposure function.

5. The method according to claim 4, wherein the first character string comprises one of the following: a group identifier of the target PIN and a PIN name generated by the first network element.

6. The method according to claim 4, wherein in a case that the PIN identifier comprises a second character string, the second character string comprises: a domain name identifier.

7. The method according to any one of claims 3 to 6, wherein the assigning, by a first network element, a PIN identifier to a target personal IoT network PIN comprises:
assigning, by the first network element, the PIN identifier to the target PIN based on a data network name or single network slice selection assistance information S-NSSAI dedicated to the target PIN.

8. The method according to any one of claims 3 to 6, wherein the second network element comprises one of the following: an application function AF, a policy control function PCF, and a user equipment UE.

9. The method according to claim 2 or 3, wherein the first network element comprises: an application function AF.

10. The method according to claim 9, wherein the first character string comprises one of the following: an identifier of a PLMN, a temporary identifier assigned by the first network element, and an identifier of the first network element, and the temporary identifier is unique in the first network element.

11. The method according to claim 10, wherein the identifier of the PLMN is a unique identifier of the PLMN where the AF is located.

12. The method according to any one of claims 9 to 11, wherein in a case that the PIN identifier comprises a second character string, the second character string comprises: an identifier of the first network element or a temporary identifier assigned by the first network element.

13. The method according to any one of claims 9 to 11, wherein the second network element comprises one of the following: a PCF and a UE.

14. The method according to any one of claims 1 to 13, wherein a length of the PIN identifier is variable.

15. An identifier assignment apparatus for a personal IoT network, applied to a first network element, and comprising:
an assignment module, configured to assign a PIN identifier to a target personal IoT network PIN, wherein the PIN identifier is unique in the first network element; and
a processing module, configured to send or configure the PIN identifier of the target PIN to a second network element.

16. The apparatus according to claim 15, wherein the PIN identifier comprises a first character string, and the first character string is a character string that is assigned by the first network element and is unique in the first network element.

17. The apparatus according to claim 16, wherein the PIN identifier further comprises: a second character string, and the first character string is connected to the second character string by using a preset symbol.

18. The apparatus according to claim 16 or 17, wherein the first network element comprises: a target network element in a public land mobile network PLMN that provides a service to the target PIN, wherein the target network element comprises at least one of the following: a unified data management function and a network exposure function.

19. The apparatus according to claim 18, wherein the first character string comprises one of the following: a group identifier of the target PIN and a PIN name generated by the first network element.

20. The apparatus according to claim 18, wherein in a case that the PIN identifier comprises a second character string, the second character string comprises: a domain name identifier.

21. The apparatus according to any one of claims 17 to 20, wherein the assignment module is configured to:
assign the PIN identifier to the target PIN based on a data network name or single network slice selection assistance information S-NSSAI dedicated to the target PIN.

22. The apparatus according to any one of claims 17 to 20, wherein the second network element comprises one of the following: an application function AF, a policy control function PCF, and a user equipment UE.

23. The apparatus according to any one of claims 17 to 20, wherein the first network element comprises: an application function AF.

24. The apparatus according to claim 23, wherein the first character string comprises one of the following: an identifier of a PLMN, a temporary identifier assigned by the first network element, and an identifier of the first network element, and the temporary identifier is unique in the first network element.

25. The apparatus according to claim 24, wherein the identifier of the PLMN is a unique identifier of the PLMN where the AF is located.

26. The apparatus according to any one of claims 23 to 25, wherein in a case that the PIN identifier comprises a second character string, the second character string comprises: an identifier of the first network element or a temporary identifier assigned by the first network element.

27. The apparatus according to any one of claims 23 to 25, wherein the second network element comprises one of the following: a PCF and a UE.

28. The apparatus according to any one of claims 15 to 27, wherein a length of the PIN identifier is variable.

29. A network side device, comprising a processor and a memory, wherein the memory stores a program or instructions runnable on the processor, and when executed by the processor, the program or the instructions implement steps of the identifier assignment method for a personal IoT network according to any one of claims 1 to 14.

30. A readable storage medium, having a program or instructions stored therein, wherein when executed by a processor, the program or the instructions implement steps of the identifier assignment method for a personal IoT network according to any one of claims 1 to 14.

31. A chip, comprising a processor and a communication interface, wherein the communication interface is coupled to the processor, and the processor is configured to run a program or instructions to implement the method according to any one of claims 1 to 14.
